# EUROPEAN PATENT SPECIFICATION

(11) **EP 2 287 686 B1**
(45) Date of publication and mention of the grant of the patent: **10.07.2019**
(21) Application number: 09009782.5
(22) Date of filing: 29.07.2009
(51) Int. Cl.: G05B 19/042, A47L 15/46, D06F 33/02, D06F 39/00

(54) **Household appliance with a sensor**
Haushaltsgerät mit einem Sensor
Appareil domestique avec capteur

(43) Date of publication of application: 23.02.2011
(73) Proprietor: Electrolux Home Products Corporation N.V., 1130 Brussels (BE)
(72) Inventor: Bohac, Jiri, 91056 Erlangen (DE); Kalb, Martin, 90530 Wendelstein (DE); Madloch, Volker, 90455 Nürnberg (DE)
(74) Representative: Electrolux Group Patents

(56) References cited:
- EP-A1- 1 732 358
- DE-A1-102006 005 770
- DE-A1-102006 052 739
- DE-C1- 10 056 570
- US-A- 5 729 025

## Description

The present invention relates to a household appliance comprising a control unit and at least one sensor. The present invention relates also to a method for operating a household appliance.

Such a household appliance is, for example, known from EP 0 399 406 A2, which discloses a commercial fully-automatic washing and drying machine, that performs automatically a series of operations including washing, rinsing, dehydration and drying. A program control is provided, which is composed of a micro-processor as a CPU and memories and the programmed control executes the program that can comprise washing, rinsing, dehydration and drying steps. Connected to the programmed controller are different sensors like a humidity sensor, a temperature sensor, a drum position sensor and a water-level sensor. In case that a water level inside the machine is still below a set level, the water level sensor produces a signal for opening the water feed valve. After the end of an operating program some power-consuming parts of the appliance are switched-off by means of a subordinate switch. It is not disclosed that also the sensors are switched-off too. For using the machine again, an input switch is to be pressed which in turn switches-on the subordinate switch.

Document DE 20 2006 018 467 U1 discloses a household appliance with at least one operating program. The household appliance comprises several sensors that are switched-on when the appliance is started by a user. It is also disclosed, that the household appliance is disconnected automatically from the power supply after the end of an operating program in order to reduce the power consumption of the appliance to zero.

EP1732358A1 discloses an apparatus and method for controlling a microwave oven using a bar code.

DE102006052739A1 discloses a method and circuit arrangements for secure control of actuators, sensors and/or users in an electrical device comprising the same, in particular an electrical domestic appliance.

US5729025A discloses electromechanically actuated turbidity sensors for machine for washing articles.

DE10056570C1 discloses a front-loading washing machine operating method with over-ride of imbalance sensor when washing light load or hand-wash fabrics.

It is an object of the present invention to provide a household appliance, where the overall power consumption is further lowered.

This object is solved by a household appliance according to claim 1. In accordance with the present invention this object is solved by providing a household appliance, where during the operation of the household appliance at least one sensor can be activated and deactivated by the control unit. This has the advantage that a sensor, which usually consumes power during the time the household appliance is switched on, can be selectively activated for the space of time during which the operation of the sensor is required. On the other hand, the sensor can be deactivated, in case its operation is not needed, which means that no output or measurement of the sensor or input to the sensor is required. Since the household appliance can comprise a plurality of such sensors, a significant reduction of power consumption can such be reached. It should be appreciated, that such an activation and/or deactivation of a sensor according to this invention can not only be done during the start of an operating program or after the end of an operation program, but also during a running program, e.g. between different programs steps or sub-programs. Since the sensor or the sensors can be activated and deactivated by the control unit, a manual input by a user is not required. The household appliance can hence run a complete operating program during which the sensor or the sensors can be activated and deactivated, if necessary, several times, until the end of the operation program is reached in a fully automatic way. Since the use of sensors in home appliances is increasing in the future, avoiding a permanent activation of the sensors between switch-on and switch-off of the home appliance contributes in an increasing manner to power saving. In addition, since more sensors normally also effects higher electromagnetic compatibility (EMC) problems, the present invention also has the advantage that by means of a selective activation and deactivation of the sensors EMC-problems can be reduced. A household appliance according to the present invention in addition results also in a longer lifetime of the built-in sensors, since due to the fact a sensor is switched-off respectively deactivated in a time frame where its operation is not necessary, the time during which a sensor is activated (during a running program) is reduced.

Preferred embodiments of the present invention are defined in the dependent claims.

The control unit of the household appliance is programmable, so that different operating programs can be loaded. In order to make the control unit programmable, a microcomputer or a micro-processor can be provided in the control unit. The household appliance can hence be controllable by an operation program being executable by the control unit.

The at least one sensor or the sensors can be activated and deactivated by the operating program, so that depending on the different program steps and the necessity to receive or send a signal to such a sensor or to perform a measurement by such a sensor, the sensor can be activated and deactivated selectively.

In a preferred embodiment of the invention an electro-mechanical switch is provided for the activation and deactivation of the sensor or the sensors, which could preferably be a relay like, for example, a Reed-relay. As an alternative also a semiconductor switch can be provided for the activation and deactivation of the sensor.

In case, that a household appliance according to the present invention comprises more than one sensor, at least some of the sensors can be connected in parallel and a separate switch for the activation and deactivation can be assigned to each sensor, providing the possibility to switch this sensor on and off independently from the other sensors. Although here a plurality of switches are needed, this has the advantage that only dedicated sensors can be activated in case a signal should be received or sent to the specific sensor or a measurement should be performed by this sensor. In an alternative embodiment of the present invention a household appliance can comprise more than one sensor and at least some of the sensors can be connected in series, which has the advantage, that a single switch can be used to activate and deactivate all the related sensors.

The present invention can be used in a plurality of different types of household appliances, like a oven or a hob, however, is most preferably used in dishwashers or washing machines with at least one operating program or a plurality of operating programs, where one program can be selected by a user and the at least one sensor can be activated and deactivated during a running operating program, which means that an activation of the sensor cannot only be performed in the starting phase of an operating program and a deactivation of the sensor not only during the end phase of an operating program or after the end of an operating program, but at any program step in-between.

The household appliance comprises at least one sensor which can be used before program start or after program end for security or monitoring functions wherein the household appliance is not running in an operation program and the control unit is connected to supply voltage. Examples for such security functions can e.g. comprise the monitoring of a water level for leakage safety, or a temperature for fire alarm.

A preferred embodiment comprises that before the switching-on and after the switching-off of the at least one sensor the program executes further program steps. This means again, that the switching-on of the sensor cannot only be performed during program start and also the switching-off of the sensor not only during or after the end of the operating program but also during a step in-between.

A further preferred embodiment relates to a household appliance that comprises more than one sensor, where more than one sensor can be activated and deactivated by the control unit and all sensors are activated and deactivated simultaneously. An alternative method relates to a household appliance comprising more than one sensor that can be deactivated and activated where the control unit can activate and deactivate the sensors independently from each other.

Another preferred embodiment according to the present invention comprises the steps, that the at least one sensor is activated in the event that the measuring signal or testing is required by the operating program from the respective sensor and further the step, that a specific sensor is deactivated in the event, that no signal is required by the operating program.

Preferred embodiments of the invention will be described below by reference to the drawings, in which:
- Fig. 1: is a schematic illustration of a household appliance comprising a control unit and three sensors, where, according to the present invention, during the operation of the household appliance the sensors can be activated and deactivated by the control unit separately from each other; and
- Fig. 2: is a household appliance according to the present invention, where three different sensors can activated and deactivated simultaneously by means of a single switch.

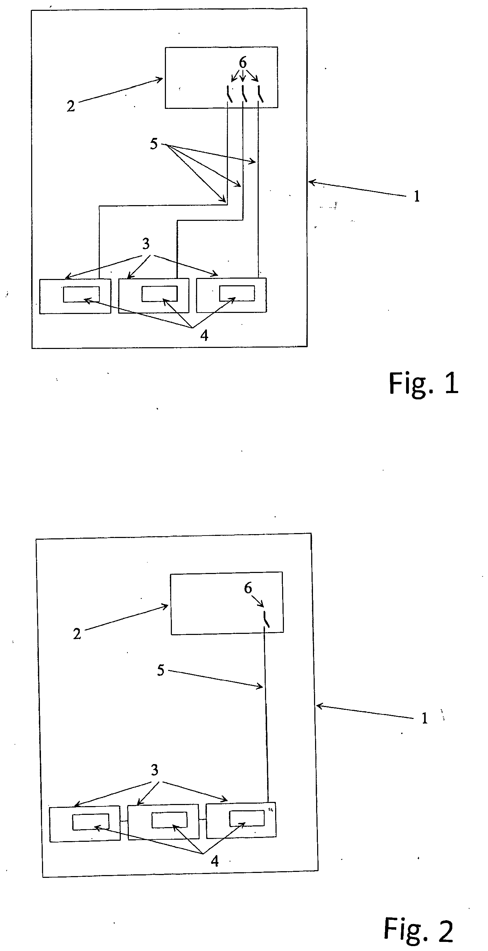

Fig. 1 shows a schematic view of household appliance 1, like e.g. a dishwasher comprising a control unit 2 for controlling the household appliance. Control unit 2 comprises three switches 6 connected to three respective sensors 3, each with a sensor electronics 4. Sensors 3 are connected in parallel by means of three power lines 5 to the control unit 2. The switches 6 can be electro-mechanical switches like, for example, relays, preferably Reed-relays, or, alternatively semiconductor switches. The control unit 2 can activate and/or deactivate the sensors 3 by means of the switches 6 and the sensor electronics 4. Through the usage of three different power lines 5 and three switches 6 each sensor 3 can be activated and deactivated separately from the other sensors. The advantage of such a household appliance 1 is that the total power consumption can be reduced, since each sensor 3 (which could be, for example, a water-level sensor, a temperature sensor or the like), can be deactivated during a running program in case that no input or output from the control unit 2 to the sensor 3 or vice versa is required.

In case of a dishwasher or washing machine, a specific sensor 3 can e.g. be activated during the complete time frame wherein washing or rinsing or drying is performed or even during a limited time frame within that period and can be deactivated during the other steps. Of course a sensor 3 can also be activated within a plurality a sub-programs and de-activated during other sub-programs.

The control unit 2 is programmable, so that an operating program of the household appliance 1 can be stored and executed by the control unit 2. During each step of the operating program running on the control unit 2 one or several of the sensors 3 can be selectively activated or deactivated depending on whether the control algorithm requires a specific sensor to be activated in order to send a signal to the sensor or to receive a signal from the sensor. The control algorithm of the operating program running in the control unit 2 can be fixed, flexible or adaptive according to the home appliance conditions.

In conclusion, the household appliance 1 comprises a control unit 2, where an operating program can be stored and executed, the operating program comprising a series of consecutive steps. As soon as a specific step requests a signal from one of the sensors 3, the control unit 2 switches-on the specific sensor 3 and afterwards switches-off the sensor for a time frame during the running operating program, where no signal needs to be received from the sensor 3 or sent to the sensor. The energy consumption of the household appliance 1 can hence be reduced. This is in contrast to known household appliances, where all provided sensors are fully activated during the complete time, where an operating program is active or running. In addition, EMC can be improved, since during a running operating program of the household appliance 1 for the most time the sensors are deactivated. Through the shorter time where sensors 3 are activated, also the sensor lifetime (SCR) is longer.

In Fig. 2 an alternative embodiment of the present invention is shown. Similar as in Fig. 1 a household appliance 1 comprises a control unit 2. In contrast to the embodiment of Fig. 1, here only one single switch 6 is provided. Switch 6 is connected via power line 5 to three different sensors 3, which are here connected not in parallel but in series, so that by closing switch 6 all sensors 3 can be switched-on (by means of each sensor electronics 4) simultaneously. On the other hand by opening single switch 6 all sensors 3 can be deactivated.

### List of reference signs

- 1: household appliance
- 2: control unit
- 3: sensor
- 4: sensor electronics
- 5: power line
- 6: switch

## Claims

1. A household appliance (1) comprising a control unit (2) and at least one sensor (3), **wherein** during the operation of the household appliance the sensor (3) is activated and deactivated by the control unit (2), wherein the control unit (2) is programmable, and wherein the household appliance is controllable by an operation program being executable by the control unit (2), and wherein the sensor (3) is activated and deactivated by the operation program in a fully automatic way, whereby a manual input by a user is not required, wherein the household appliance is a dishwasher or a washing machine or a oven or a hob with at least one operation program and the at least one sensor (3) is activated and deactivated during a running operation program, until the end of the operating program is reached. **characterised in that** the sensor is activated prior to the start or after the termination of the operation program for security or monitoring functions, comprising monitoring of a water level for leakage safety or a temperature for fire alarm, while the control unit (2) is connected to the supply voltage.

2. The household appliance of claim 1, wherein an electromechanical switch (6), preferably by a relay, most preferably a Reed-relay is provided for the activation and deactivation of the sensor (3).

3. The household appliance (1) of anyone of the preceding claims 1 to 2, wherein a semiconductor switch (6) is provided for the activation and deactivation of the sensor (3) .

4. The household appliance (1) of anyone of the preceding claims, wherein the household appliance comprises more than one sensor (3) and wherein a plurality of sensors are connected in parallel and a separate switch for the activation and deactivation is assigned to each of the plurality of sensors so that the sensors can be activated and deactivated independently from each other.

5. The household appliance (1) of anyone of the preceding claims 1 to 3, wherein the household appliance comprises more than one sensor (3) and wherein a plurality of sensors are connected in series and a single switch is provided for the activation and deactivation of the plurality of sensors.

## Patentansprüche

1. Haushaltsgerät (1), das eine Steuereinheit (2) und mindestens einen Sensor (3) umfasst, wobei der Sensor (3) während des Betriebs des Haushaltsgeräts durch die Steuereinheit (2) aktiviert und deaktiviert wird,
wobei die Steuereinheit (2) programmierbar ist und wobei das Haushaltsgerät durch ein Betriebsprogramm steuerbar ist, das durch die Steuereinheit (2) ausführbar ist, und
wobei der Sensor (3) durch das Betriebsprogramm in einer vollautomatischen Weise aktiviert und deaktiviert wird, wodurch keine manuelle Eingabe durch den Benutzer erforderlich ist,
wobei das Haushaltsgerät ein Geschirrspüler oder eine Waschmaschine oder ein Backofen oder ein Kochfeld mit mindestens einem Betriebsprogramm ist und wobei der mindestens eine Sensor (3) während eines ablaufenden Betriebsprogramms aktiviert und deaktiviert wird, bis das Ende des Betriebsprogramms erreicht wird,
**dadurch gekennzeichnet, dass** der Sensor vor dem Start oder nach der Beendigung des Betriebsprogramms für Sicherheits- und Überwachungsfunktionen aktiviert wird, die ein Überwachen eines Wasserstands für eine Lecksicherheit oder einer Temperatur für einen Feueralarm umfasst, während die Steuereinheit (2) mit einer Versorgungsspannung verbunden ist.

2. Haushaltsgerät nach Anspruch 1, wobei ein elektromechanischer Schalter (6) vorzugsweise ein Relais und am bevorzugtesten ein Reed-Relais für die Aktivierung und Deaktivierung des Sensors (3) bereitgestellt wird.

3. Haushaltsgerät (1) nach einem der vorhergehenden Ansprüche 1 bis 2, wobei ein Halbleiterschalter (6) für die Aktivierung und Deaktivierung des Sensors (3) bereitgestellt wird.

4. Haushaltsgerät (1) nach einem der vorhergehenden Ansprüche, wobei das Haushaltsgerät mehr als einen Sensor (3) umfasst und wobei eine Vielzahl von Sensoren parallel geschaltet sind und wobei jedem aus der Vielzahl von Sensoren ein separater Schalter zum Aktivieren und Deaktivieren zugeteilt ist, sodass die Sensoren unabhängig voneinander aktiviert und deaktiviert werden können.

5. Haushaltsgerät (1) nach einem der vorhergehenden Ansprüche 1 bis 3, wobei das Haushaltsgerät mehr als einen Sensor (3) umfasst und wobei eine Vielzahl von Sensoren in Reihe geschaltet sind und ein einziger Schalter für das Aktivieren und Deaktivieren der Vielzahl von Sensoren bereitgestellt wird.

## Revendications

1. Appareil ménager (1) comprenant une unité de contrôle (2) et au moins un capteur (3), le capteur (3) étant activé et désactivé par l'unité de contrôle (2) pendant le fonctionnement de l'appareil ménager,
l'unité de contrôle (2) étant programmable, et l'appareil ménager pouvant être contrôlé par un programme d'opérations pouvant être exécuté par l'unité de contrôle (2), et
le capteur (3) étant activé et désactivé par le programme d'opérations de manière totalement automatique, une entrée manuelle par un utilisateur n'étant pas requise, et
l'appareil ménager étant un lave-vaisselle ou une machine à laver ou un four ou une plaque avec au moins un programme d'opérations, et l'au moins un capteur (3) étant activé et désactivé pendant un programme d'opérations en cours d'exécution, jusqu'à ce que la fin du programme d'opérations soit atteinte,
l'appareil ménager étant **caractérisé en ce que** le capteur est activé avant le début ou après la fin du programme d'opérations pour des fonctions de sécurité ou de surveillance, comprenant la surveillance d'un niveau d'eau pour une sécurité contre les fuites ou d'une température pour une alarme-incendie, tandis que l'unité de contrôle (2) est connectée à la tension d'alimentation.

2. Appareil ménager selon la revendication 1, dans lequel un interrupteur électromécanique (6), de préférence un relais, plus préférablement un relais à lames souples, est fourni pour l'activation et la désactivation du capteur (3).

3. Appareil ménager (1) selon l'une quelconque des revendications 1 et 2, dans lequel un interrupteur à semiconducteur (6) est fourni pour l'activation et la désactivation du capteur (3).

4. Appareil ménager (1) selon l'une quelconque des revendications précédentes, l'appareil ménager comprenant une pluralité de capteurs (3) et la pluralité de capteurs étant connectés en parallèle, et un interrupteur indépendant d'activation et de désactivation étant attribué à chaque capteur de la pluralité de capteurs de sorte que les capteurs puissent être activés et désactivés indépendamment les uns des autres.

5. Appareil ménager (1) selon l'une quelconque des revendications 1 à 3, l'appareil ménager comprenant une pluralité de capteurs (3) et la pluralité de capteurs étant connectés en série, et un unique interrupteur étant fourni pour l'activation et la désactivation de la pluralité de capteurs.
